(19) **Europäisches Patentamt / European Patent Office / Office européen des brevets**

(11) **EP 3 246 372 B1**

(12) **EUROPEAN PATENT SPECIFICATION**

(45) Date of publication and mention
of the grant of the patent:
**08.01.2020 Bulletin 2020/02**

(21) Application number: **15877962.9**

(22) Date of filing: **24.11.2015**

(51) Int Cl.:
*C09J 133/04* (2006.01)    *C09J 11/08* (2006.01)
*C09J 151/00* (2006.01)

(86) International application number:
**PCT/JP2015/082958**

(87) International publication number:
**WO 2016/114010 (21.07.2016 Gazette 2016/29)**

(54) **EMULSION TYPE ADHESIVE COMPOSITION**

EMULSIONSARTIGE KLEBSTOFFZUSAMMENSETZUNG

COMPOSITION ADHÉSIVE DE TYPE ÉMULSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.01.2015 JP 2015006968**

(43) Date of publication of application:
**22.11.2017 Bulletin 2017/47**

(73) Proprietor: **Saiden Chemical Industry Co., Ltd.
Tokyo 103-0023 (JP)**

(72) Inventors:
• **UMEMIYA, Hirokazu**
**Saitama-shi
Saitama 336-0026 (JP)**
• **HAMADA, Takehiko**
**Saitama-shi
Saitama 336-0026 (JP)**

(74) Representative: **Blodig, Wolfgang
Wächtershäuser & Hartz
Patentanwaltspartnerschaft mbB
Weinstrasse 8
80333 München (DE)**

(56) References cited:
**JP-A- S5 958 069        JP-A- S5 958 069
JP-A- 2005 239 875        JP-A- 2006 124 691
JP-A- 2006 509 890        JP-A- 2012 126 889
US-A1- 2003 077 443        US-A1- 2003 143 409**

• **DATABASE WPI Week 198846 Thomson
Scientific, London, GB; AN 1988-326904
XP002782962, & JP S63 241084 A (JAPAN
SYNTHETIC RUBBER CO LTD) 6 October 1988
(1988-10-06)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to an emulsion type adhesive composition containing a mixture of at least two kinds of emulsions, and in more detail, the present invention relates to a technique that provides an emulsion type adhesive composition that is excellent in liquid stability of emulsion in spite of low viscosity and that is capable of forming an adhesive layer exhibiting a high adhesive force and a high tackiness.

## Background Art

Applications of adhesives cover a wide variety of fields such as tapes, sheets, labels, stickers, and wall paper. On the other hand, materials as adherends also exist in a wide range of fields such as plastics, metals, glass, pottery, paper, cloth, wood, and perishables. Natural rubber, synthetic rubber, an acrylic copolymer, or the like has conventionally been used as the main component of adhesives, and solvent type adhesives obtained by dissolving these materials in an organic solvent and emulsion type adhesives obtained by dispersing these materials in water have been known. However, solvent type adhesives have problems such as harmful gas generation when combusted due to a fire or the like and environmental sanitation due to an organic solvent evaporated during production of an adhesive layer, and therefore aqueous emulsion type adhesives have increasingly been used in recent years. Among the aqueous emulsion type adhesives, emulsion type adhesives containing an acrylic copolymer as the main component and having excellent adhesiveness and weather resistance have widely been spread.

In preparing an adhesive for which a high adhesive force and a high tackiness are required among such emulsion type adhesives, adjusting the composition of the acrylic copolymer, or making use of a chain transfer agent or a crosslinking agent have been conducted to achieve a high adhesive force. However, in any of the methods, there has been a limit to prepare an adhesive that achieves a high adhesive force and a high tackiness. Against the problem, adding a tackifying resin (tackifier) to achieve a high adhesive force has also been conducted. Particularly, adjusting the softening point of the tackifying resin or the amount of the tackifying resin added to achieve a high adhesive force has been conducted. However, there is also a limit in this method as will be described later.

On the other hand, the high adhesive force and high tackiness have also been achieved by increasing the application quantity of an adhesive layer. However, there has been a tendency that low-viscosity adhesives are required so that the application quantity of adhesives may be decreased to reduce product costs or so that high-speed coating may be realized to improve working efficiency, and therefore the development of an adhesive that exhibits a high adhesive force and a high tackiness in spite of a low application quantity and a low viscosity has been desired.

Various proposals have been made in order to meet the requirements. In Patent Literature 1 for example, there is a proposal on an acrylic emulsion intended to improve adhesiveness to materials, such as urethane foams, whose surface is not smooth. Specifically, two kinds of acrylic monomer dispersion liquids each containing a tackifier dissolved in a different ratio are prepared, polymerization reaction of one of the acrylic monomer dispersion liquids is then conducted, and thereafter the other acrylic monomer dispersion liquid is added to further conduct the polymerization reaction, thereby obtaining an acrylic emulsion. Moreover, in Patent Literatures 2 and 3, emulsion type adhesive compositions each having improved performances to polyolefin-based resins are proposed. Specifically, Patent Literature 2 discloses an emulsion type adhesive composition obtained as follows. Namely, an oil-soluble component containing an ethylenically unsaturated monomer (A) and a tackifier (B) is emulsified in an aqueous medium using an emulsifier (C) so as to have a particular particle diameter to prepare an emulsified liquid [I], the emulsified liquid [I] is then subjected to polymerization in the presence of a polymerization initiator (D) to obtain a resin emulsion [II], and further an ethylenically unsaturated monomer (E) containing an alkyl (meth)acrylate as the main component is polymerized in the presence of the resin emulsion [II] to obtain the emulsion type adhesive composition. Moreover, Patent Literature 3 discloses a production method in which a particular monomer, a particular tackifying resin, and a particular anionic surface active agent are emulsified and dispersed to prepare a monomer-emulsified liquid having a particular particle diameter, and the monomer-emulsified liquid is then subjected to polymerization while the monomer-emulsified liquid is dropped into an aqueous solution for polymerization, which contains a water-soluble polymerization initiator and an anionic surface active agent, to prepare an aqueous synthetic resin emulsion of polymer particles having a particular particle diameter.

On the other hand, there is also a proposal on mixing polymer emulsions having a different glass transition temperature (Tg) for the purpose of realizing a high adhesive force and a high tackiness. For example, Patent Literature 4 proposes an emulsion type adhesive composition containing a low-Tg polymer emulsion, a high-Tg polymer emulsion, a crosslinking agent, and a tackifying resin. It is mentioned that, according to the technique, the emulsion type adhesive composition exhibits a high adhesive force to both the adherend having a poor adhesiveness such as a polyolefin and the adherend having a rough surface such as a corrugated cardboard even when the amount of the tackifying resin used is reduced, and is excellent in balance between cohesive force and tackiness. Moreover, in Patent Literature 5, there is a proposal on an adhesive composition containing: a polymer L and a polymer H each having a different glass transition temperature (Tg); and, if necessary, a tackifying resin, and it is mentioned that adhesiveness, high-temperature cohesiveness, and repulsion resistance can be realized at a high level.

Furthermore, in Patent Literature 6, there is a proposal on an aqueous adhesive composition containing an acrylic adhesive emulsion (A) and a copolymer emulsion (B) having a particular particle diameter and a glass transition temperature. It is mentioned that the aqueous adhesive composition exhibits an excellent adhesiveness to a film of a non-polar polymer such as a polyolefin and the adhesive layer is excellent in secondary processability such as cutting. Further, it is described that the acrylic adhesive emulsion (A) as the main component contains a functional group-containing alkyl (meth)acrylate-based copolymer and a tackifying resin.

Patent Literature 7 discloses a highly-adhesive emulsion-type adhesive formed from a mixture of: (A) 100 pbw calculated in terms of solid content of tackifier resin emulsion obtained by aqueous emulsion polymerization of a polymer solution in which 100 pbw of tackifier resin is dissolved in 30-150 pbw of $\alpha$, $\beta$-monoloefinic monomer, and (B) 20-100 pbw calculated in terms of solid content of $\alpha$, $\beta$-monoloefinic synthetic resin emulsion, not containing tackifier resin and having a secondary transition point of 10 °C or less.

**Citation List**

**Patent Literature**

Patent Literature 1: Japanese Patent Laid-Open No. 1999-189610
Patent Literature 2: Japanese Patent Laid-Open No. 2003-096420
Patent Literature 3: Japanese Patent Laid-Open No. 2003-335805
Patent Literature 4: Japanese Patent Laid-Open No. 2006-124691
Patent Literature 5: Japanese Patent Laid-Open No. 2010-095609
Patent Literature 6: Japanese Patent Laid-Open No. 2001-207146
Patent Literature 7: Japanese Patent Laid-Open No. JP S59 58069

**Summary of Invention**

**Technical Problem**

However, according to studies conducted by the present inventors, there have been problems as described below in the conventional techniques proposed above. Firstly, in any of the techniques described in Patent Literatures 1 to 3 where components to be polymerized are devised in order to obtain respective emulsions proposed as described above, polymerization of a base resin is inhibited by the tackifying resin (tackifier) contained in the monomer mixture, and therefore there has been a problem that it is difficult to improve cohesive force of the adhesive to be obtained. On the other hand, in the techniques which are proposed and described in Patent Literatures 4 to 6 and in which different kinds of emulsions are mixed, a tackifying resin (tackifier) is mixed in a form of an emulsion into a mixed composition after the mixed composition is prepared, the above-described problem during polymerization does not occur. However, according to studies conducted by the present inventors, the viscosity of the adhesive becomes high in these techniques, and when the viscosity is lowered to a level that has been required in recent years, a problem that the tackifying resin being in use separates or that the tackifying resin is settled with time occurs. Accordingly, preparing a low-viscosity adhesive composition that exhibits a favorable performance has not been able to be realized with these techniques. That is to say, in any of the conventional techniques, the tackifying resin has been used in order to improve adhesive force, however a new problem arises in the adhesive due to the addition of the tackifying resin, and therefore it cannot be said that the tackifying resin has effectively been utilized.

Accordingly, an object of the present invention is to establish a technique by which a new problem does not arise in an adhesive due to addition of a tackifying resin and which is capable of effectively utilizing the tackifying resin, and to provide an emulsion type adhesive composition that is capable of forming an adhesive layer that can achieve a high adhesive force and a high tackiness even when the application quantity is low, that can further realize high-speed coating because of low viscosity, and that is excellent in environmental adaptability.

**Solution to Problem**

The object is achieved by the present invention described below. That is to say, the present invention provides an emulsion type adhesive composition containing a mixture of at least two kinds of emulsions, the emulsion type adhesive composition containing: 51 to 90% by mass of a low-Tg acrylic adhesive emulsion (A) as a main component; and 10 to 49% by mass of a high-Tg copolymer emulsion (B) as an accessory component, and having: a solid content of 50% or more; and a viscosity of 1000 mPa·s or lower at 25°C, wherein: the low-Tg acrylic adhesive emulsion (A) has a glass transition temperature (Tg) of -70°C to -50°C; the high-Tg copolymer emulsion (B) is an emulsion of a copolymer obtained by subjecting a monomer mixture containing at least an alkyl (meth)acrylate-based monomer to emulsion polymerization in the presence of 20 to 200 parts by mass of a tackifying resin relative to 100 parts by mass of the monomer mixture, the copolymer having a glass transition temperature (Tg) of -30°C to 30°C, a weight average molecular weight of 5000 to 70000, and an average particle diameter of 200 to 2000 nm.

The more preferred embodiments of the aqueous emulsion according to the present invention include the following embodiments. That is to say, the amount of the tackifying resin is within a range from 40 to 120 parts by mass relative to 100 parts by mass of the monomer mixture containing an alkyl (meth)acrylate-based monomer, and the copolymer has a weight average molecular weight of 5000 to 60000; the emulsion type adhesive composition contains the low-Tg acrylic adhesive emulsion (A) within a range from 60 to 80% by mass and, the high-Tg copolymer emulsion (B) within a range from 20 to 40% by mass as an accessory component; the low-Tg acrylic adhesive emulsion (A) has a viscosity within a range from 50 to 700 mPa·s at 25°C, and the high-Tg copolymer emulsion (B) has a viscosity within a range from 50 to 1000 mPa·s at 25°C; and the tackifying resin has a softening point (°C) of 70 to 170°C.

**Advantageous Effects of Invention**

According to the present invention, an emulsion type adhesive composition that has excellent performance and that is capable of forming an adhesive layer having a high adhesive force and a high tackiness is provided by use of a low-viscosity adhesive that has been desired in recent years from the reason that such a low-viscosity adhesive can reduce the quantity of application and can realize high-speed coating. Specifically, even though the constitution of the emulsion type adhesive composition according to the present invention is simple in that the emulsion type adhesive composition contains a mixture of at least two kinds of emulsions of a low-Tg acrylic adhesive emulsion (A) as the main component and a high-Tg copolymer emulsion (B) as an accessory component, and a tackifying resin is added to the mixture, the emulsion type adhesive composition exhibits the above-described excellent performance. That is to say, in the present invention, the emulsion type adhesive composition having excellent characteristics can be realized without employing a special process by the extremely simple constitution in which the tackifying resin is allowed to exist in the step of obtaining the copolymer emulsion (B) being an accessory component through emulsion polymerization. Therefore, aqueous paint compositions and so on which contain the emulsion type adhesive composition according to the present invention are industrially extremely useful because such compositions can reduce production costs, and besides, have excellent characteristics such that the problems such as separation and sedimentation of the added tackifying resin do not occur even particularly when the viscosity of the compositions are made low although a high concentration of the tackifying resin is contained.

**Brief Description of Drawing**

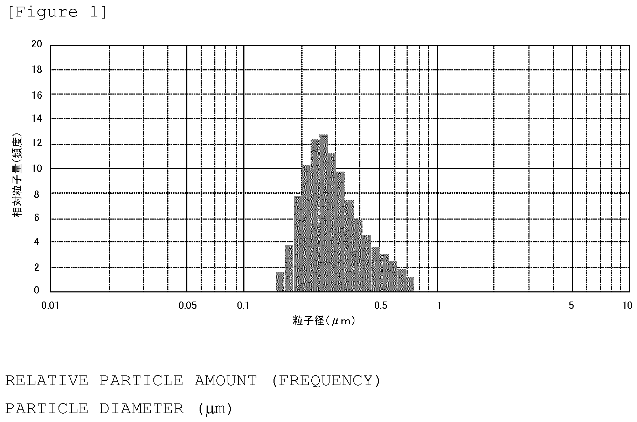

[Figure1] Figure 1 is a graph showing a particle size distribution of copolymer emulsion (B-1) that constitutes the emulsion type adhesive composition according to the present invention and that is obtained in Synthesis Example 2.

**Description of Embodiments**

Hereinafter, the present invention will be described in more detail giving preferred embodiments for carrying out the present invention. It is to be noted that the term "(meth) acrylic" in the appended claims and the present specification of the present invention means both the term "acrylic" and the term "methacrylic", and the term "(meth) acrylate" means both of the term "acrylate" and the term "methacrylate".

Hereinafter, details about how the present inventors have reached the present invention will be described. The present inventors have conducted diligent studies in order to achieve the object of the present invention and have recognized that the adhesive containing a mixture of polymer emulsions each having a different glass transition temperature (Tg) cannot realize the desired performance that is an object of the present invention even if the mixing ratio is changed anyway. That is to say, in the case where a base composition is prepared by mixing polymer emulsions each having a different glass transition temperature (Tg), the tackiness is high, but the holding force (adhesive force) is low at a low-Tg portion, on the other hand, the holding force is high, but the tackiness is low at a high-Tg portion, and therefore it is favorable if an adhesion having a high holding force and a high tackiness can be prepared can be prepared by using these polymer emulsions together, however according to studies conducted by the present inventors, an adhesion having a high holding force and a high tackiness cannot be realized by the combination of only two kinds of polymer emulsions each having a different Tg even if the mixing ratio is changed anyway.

Against the problem, the present inventors have found that, by the novel constitution in which, as the high-Tg copolymer emulsion (B) being an accessory component, an emulsion of a copolymer obtained by subjecting a monomer mixture containing an alkyl (meth)acrylate-based monomer to emulsion polymerization in the presence of a particular tackifying resin is used, a low-viscosity adhesive can be realized without causing a problem such as separation of a tackifying resin or sedimentation of a tackifying resin with time even when the tackifying resin is contained in the adhesive in an amount larger than the amount conventionally contained. That is to say, the high-Tg copolymer emulsion (B) constituted in the manner as described above has an improved tackiness and also has a high holding force. Further, use of the copolymer emulsion (B) as an accessory component allows a tackifying resin to be contained in a large amount, and therefore the emulsion type adhesive composition according to the present invention obtained by mixing the copolymer emulsion (B) with the low-Tg acrylic adhesive emulsion (A) as the main component can realize excellent properties capable of forming an adhesive layer that can achieve a high adhesive force and a high tackiness even when the application quantity is low, and can further realize high-speed coating because of low viscosity.

With respect to the reason that the emulsion type adhesive composition according to the present invention exhibits the excellent performance, the present inventors consider as follows. That is to say, the high-Tg copolymer emulsion (B) obtained in the manner as described above has a low molecular weight as a copolymer and can make the tackiness high. It is considered that the reason is that the existence of the tackifying resin at the time of subjecting the monomer mixture to emulsion polymerization moderately inhibits the polymerization of the monomer mixture. Further, when the tackifying resin is contained at the time of emulsion polymerization, the tackifying resin can be uniformly dissolved or dispersed in the copolymer emulsion (B), and therefore the tackifying resin can be contained more than in the case where the tackifying resin is added in an emulsion form. It is considered that, in the emulsion type adhesive composition according to the present invention, the above-described mechanisms function simultaneously, thereby improving the adhesive force, and therefore an adhesive having excellent performance that has never been obtained with the conventional techniques can be realized. Hereinafter, respective components, etc. that constitute the emulsion type adhesive composition according to the present invention will be described in detail.

The emulsion type adhesive composition according to the present invention contains a mixture of at least two kinds of emulsions, the composition containing at least: 51 to 90% by mass of a low-Tg acrylic adhesive emulsion (A) as a main component; and, as an accessory component, 10 to 49% by mass of a high-Tg copolymer emulsion (B) that contains a tackifying resin. Preferably, the (A) and (B) may be contained in a ratio of 60 to 80% by mass of (A) and 20 to 40% by mass of (B). Further, the emulsion type adhesive composition has a solid content of 50% or more, for example, a solid content of about 60%, has a low viscosity, as low as a viscosity of 1000 mPa·s or lower at 25°C, and in the emulsion type adhesive composition, the two kinds of emulsions of the main component and the accessory component are constituted as described below. The acrylic adhesive emulsion (A) as the main component that constitutes the present invention has a glass transition temperature (Tg) of -70°C to -50°C, which is lower than that of the copolymer emulsion (B), and further, it is preferable that the emulsion (A) has a viscosity within a range from 50 to 700 mPa·s at 25°C.

Further, the high-Tg copolymer emulsion (B) as an accessory component which is mixed with the emulsion (A) in the particular ratio is an emulsion of a copolymer obtained by subjecting a monomer mixture containing at least an alkyl (meth) acrylate-based monomer to emulsion polymerization in the presence of a particular amount of a tackifying resin, and, by constituting the copolymer emulsion (B) as such, the remarkable effects of the present invention can be realized. Specifically, the high-Tg copolymer emulsion (B) as an accessory component is an emulsion of a copolymer obtained by subjecting a monomer mixture containing at least an alkyl (meth)acrylate-based monomer to emulsion polymerization in the presence of 20 to 200 parts by mass of a tackifying resin relative to 100 parts by mass of the monomer mixture, and the copolymer has a Tg of -30°C to 30°C, a molecular weight of 5000 to 70000, and an average particle diameter of 200 to 2000 nm. According to studies conducted by the present inventors, the polymer the molecular weight of which is low, as low as 5000 to 70000, has a gel fraction of 20% or less, and can realize a sufficiently high adhesive force and a sufficiently high tackiness.

In the adhesive composition according to the present invention, it is more preferable that the amount of the tackifying resin used in obtaining the copolymer emulsion (B) through emulsion polymerization is within a range from 40 to 120 parts by mass relative to 100 parts by mass of the monomer mixture containing an alkyl (meth)acrylate-based monomer being a polymerization component and the copolymer has a molecular weight of 5000 to 60000. Further, it is preferable that the high-Tg copolymer emulsion (B) has a viscosity of 50 to 1000 mPa·s at 25°C. Hereinafter, the respective components that constitute the emulsion type adhesive composition according to the present invention will be described.

[Acrylic Adhesive Emulsion (A)]

The emulsion type adhesive composition according to the present invention contains an acrylic adhesive composition (A) as the main component in an amount of 51 to 90% by mass. The emulsion type adhesive composition according to the present invention containing 60 to 80% by mass of the acrylic adhesive emulsion (A) is more preferable.

Moreover, it is required that the Tg of the acrylic adhesive emulsion (A) constituting the present invention be -70°C to -50°C, namely be lower than the Tg of the copolymer emulsion (B) used together with the acrylic adhesive emulsion (A). Any of the conventionally known acrylic adhesive emulsions can be used as long as the acrylic adhesive emulsion satisfies the glass transition temperature. It is to be noted that the Tg of a copolymer can be determined from the calculated value using the Tg values of respective homopolymers, the Tg values described in Japan Emulsion Industry Association Standard "Method of representing hardness of film of synthetic resin emulsion (107-1996)" (Nihon Emulsion Kogyokai Kikaku, "Goseijushi emulsion no himaku no katasa hyojihouhou (107-1996)" in Japanese). This will be mentioned later.

(Monomer Component)

The acrylic adhesive emulsion (A) may be used as long as it contains a (co)polymer that is obtained by subjecting an acrylic monomer such as (meth) acrylic acid or a (meth) acrylate to emulsion polymerization and that satisfies the above-described range of the Tg. Examples of the acrylic monomer include alkyl (meth)acrylate-based monomers as listed below, and the acrylic adhesive emulsion (A) can easily be obtained by subjecting the alkyl (meth) acrylate-based monomers alone or in combination of two or more thereof to emulsion polymerization. Examples of the alkyl (meth)acrylate-based monomer that can be used for preparing the emulsion (A) include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, hexyl (meth)acrylate, 2-ethylhexyl (meth)acrylate, octyl (meth)acrylate, n-nonyl (meth)acrylate, isononyl (meth)acrylate, decyl (meth)acrylate, undecyl (meth)acrylate, dodecyl (meth)acrylate, n-amyl (meth)acrylate, isoamyl (meth)acrylate, benzyl (meth)acrylate, lauryl (meth)acrylate, cyclohexyl (meth)acrylate, tetradecyl (meth)acrylate, stearyl (meth)acrylate, 2-methoxyethyl acrylate, and ethyl carbitol acrylate. The emulsion (A) that constitutes the present invention can be prepared using one or more monomers selected from the group of monomers listed above, however it is preferable to use a monomer selected from acrylates containing an alkyl chain having a number of carbon atoms of 4 to 12 as the main component.

Moreover, in addition to the above-described monomers, other acrylic monomers and copolymerizable monomers other than acrylic monomers such as those listed below can also be used for preparation of the acrylic adhesive emulsion (A). Examples of such monomers include vinyl monomers such as acrylonitrile, vinyl acetate, vinyl propionate, vinyl versatate, styrene, and vinyl benzoate. Examples thereof further include monomers containing two or more polymerizable unsaturated groups such as divinylbenzene, diallyl phthalate, triallyl cyanurate, triallyl isocyanurate, ethylene glycol di(meth)acrylate, 1,2-propylene glycol di(meth)acrylate, 1,3-propylene glycol di(meth)acrylate, 1,4-butanediol di(meth)acrylate, 1,6-hexanediol di(meth)acrylate, neopentyl glycol di(meth)acrylate, trimethylolpropane tri(meth)acrylate, and diallyl (meth)acrylate. One or more monomers selected from these groups can be used as necessary.

Furthermore, unsaturated monomers having various kinds of functional groups such as those listed below can also be used as a monomer in preparing the acrylic adhesive emulsion (A) that constitutes the present invention. Example of such monomers include unsaturated monomers having a carboxy group, an amide group, a substituted amide group, an amino group, a substituted amino group, a hydroxy group, an epoxy group, a carbonyl group, a mercapto group, a silicon-containing group, or the like. Preferable examples include unsaturated monomers having a carboxy group, a hydroxy group, a carbonyl group, or an epoxy group, and one or more monomers selected from the above-described group can be used as necessary.

Examples of the unsaturated monomer having a carboxy group include (meth) acrylic acid, itaconic acid, maleic acid, maleic anhydride, fumaric acid, and fumaric anhydride. Examples of the unsaturated monomer having a hydroxy group include 2-hydroxyethyl (meth)acrylate, 4-hydroxypropyl (meth)acrylate, 2-hydroxybutyl (meth)acrylate, caprolactone-modified (meth)acrylate, polyethylene glycol (meth)acrylates, and polypropylene glycol (meth)acrylates. Examples of the unsaturated monomers having a carbonyl group include acrolein, diacetone acrylamide, formyl styrol, vinyl methyl ketone, vinyl ethyl ketone, (meth)acryloxy alkyl propenals, diacetone (meth)acrylate, acetonyl (meth)acrylate, and acetoacetoxyethyl (meth)acrylate. Examples of the unsaturated monomer having an epoxy group include glycidyl (meth)acrylate, glycidyl (meth)allyl ether and 3,4-epoxycyclohexyl(meth)acrylate. One or more monomers selected from unsaturated monomers having one of these functional groups can be used as necessary in producing the acrylic adhesive emulsion (A) through polymerization.

(Production Method)

In the case where the acrylic adhesive emulsion (A) that constitutes the emulsion type adhesive composition according to the present invention is obtained through copolymerization, a monomer composition is designed by appropriately selecting the monomers such as those listed above so that the Tg of the copolymer that constitutes the emulsion to be obtained may fall within a range from -70°C to -50°C in view of a calculated value obtained using a Tg value of each monomer, and then emulsion polymerization is conducted. The emulsion polymerization method conducted in this case is not particularly limited, and the acrylic adhesive emulsion (A) can appropriately be produced making use of a conventionally known emulsion polymerization method. The acrylic adhesive emulsion (A) can be produced through any of, for example, a one-step polymerization method, a multi-step polymerization method, and a method in combination thereof.

Specific emulsion polymerization method is not particularly limited, however the methods as listed below can be utilized. Examples thereof include: a method for conducting emulsion polymerization in which a monomer mixture containing an acrylic monomer component, such as the alkyl (meth)acrylate-based component described above, as a single component or a plurality of acrylic monomer components, and at least water, a surface active agent, and a polymerization initiator are placed together into a reaction container; a method for conducting emulsion polymerization dropping a single monomer or a monomer mixture, and a silane coupling agent separately into a reaction vessel in which at least water, a surface active agent, and a polymerization initiator are placed; a method for conducting emulsion polymerization dropping a single monomer or a monomer mixture that is emulsified with water and a surface active agent in advance into a reaction container in which water and, as necessary, a surface active agent or a polymerization initiator are placed; and a method in combination of these methods.

(Polymerization Initiator)

As a polymerization initiator for use in the emulsion polymerization, for example, a peroxide of an ammonium salt such as ammonium persulfate, and organic peroxides such as t-butyl hydroperoxide and hydrogen peroxide can be used. It is preferable that the amount of these polymerization initiators used is about 0.1 to about 1.0 part by mass per 100 parts by mass of the single monomer or the monomer mixture for use in producing the acrylic adhesive emulsion (A). Moreover, the polymerization initiator can be used in each stage of polymerization, and polymerization reaction can be conducted adding a predetermined amount of the polymerization initiator in each stage.

(Surface Active Agent)

A surface active agent can be used as an emulsifying agent in the emulsion polymerization. Any of the conventionally known surface active agents such as anionic surface active agents and non-ionic surface active agents can be used, which is similar also in the case where emulsion polymerization is conducted for obtaining the copolymer emulsion (B) specified in the present invention. Examples of the surface active agent include surface active agents having at least one hydrophilic group selected from $-SO_3NH_4$ group, $-OSO_2NH_4$ group, and ethylene oxide chains. As a specific anionic surface active agent, for example, Newcol 707-SF, Newcol 714-SF, Newcol 723-SF, and Newcol 740-SF [all trade names and manufactured by Nippon Nyukazai Co., Ltd.], or the like can be used. Moreover, specific examples of the nonionic surface active agent that can be used in the present invention include Newcol 707, Newcol 710, Newcol 714, Newcol 723, Newcol 740, and Newcol 780 [all trade names and manufactured by Nippon Nyukazai Co., Ltd].

Further, it is more preferable that the surface active agent for use in the present invention is a reactive surface active agent having a polymerizable ethylenically unsaturated group. Examples of such a surface active agent include sodium polyoxyethylene alkyl ether sulfates, etc. Specific examples of the reactive surface active agent include LATEMUL E-118B, LATEMUL PD-104, LATEMUL PD-105, LATEMUL PD-420, LATEMUL PD-430, LATEMUL PD-430S, and LATEMUL PD-450 [all trade names and manufactured by Kao Corporation], AQUARON HS-10, AQUARON KH-05, AQUARON KH-10, AQUARON RN-05, AQUARON RN-10, and AQUARON RN-20 [all trade names and manufactured by DKS Co., Ltd.], ADEKARIA SOAP SE-10N, ADEKARIA SOAP SR-10, ADEKARIA SOAP SR-20, ADEKARIA SOAP SR-3025, ADEKARIA SOAP ER-10, ADEKARIA SOAP ER-20, ADEKARIA SOAP ER-30, and ADEKARIA SOAP ER-40 [all trade names and manufactured by ADEKA Corporation], and Antox MS-60 [trade name, manufactured by Nippon Nyukazai Co., Ltd.]. These reactive surface active agents may be used alone or in combination of two or more, or may be used together with a conventionally known general surface active agent.

It is preferable that the amount of the surface active agent used in obtaining through emulsion polymerization the acrylic adhesive emulsion (A) that constitutes the emulsion type adhesive composition according to the present invention is 0.1 to 5 parts by mass in terms of the content of the surface active agent itself relative to 100 parts by mass of the single monomer or monomer mixture for use in polymerization. It is not preferable that the amount of the surface active agent used is less than 0.1 parts by mass in terms of the content of the surface active agent itself because the emulsion (A) obtained tends to be inferior in polymerization stability. On the other hand, when the amount of the surface active agent used exceeds 5 parts by mass in terms of the content of the surface active agent itself, the properties of an adhesive layer in the case where the adhesive layer is formed on an adherend using the adhesive composition according to the present invention containing the obtained emulsion (A) mixed therein may tend to be insufficient.

(Physical Properties)

It is essential that the acrylic adhesive emulsion (A) that is obtained in the manner as described above and that constitutes the present invention have a low glass transition temperature (Tg), as low as -70°C to -50°C as described previously. It is more preferable that the glass transition temperature is -70°C to -60°C. When the Tg is lower than -70°C, the acrylic adhesive emulsion (A) has a low cohesive force and is inferior in terms of overflow of a glue and die cutting properties, and when the glass transition temperature is higher than -50°C, a high tackiness may be difficult to obtain.

Any acrylic adhesive emulsion having a Tg within the range as described-above may be used as the acrylic adhesive emulsion (A) that constitutes the present invention, however it is more preferable that the acrylic adhesive emulsion (A) further satisfies the physical properties listed below. First of all, it is preferable that the viscosity at 25°C is about 50 to about 700 mPa·s, more preferably 50 to 300 mPa·s. That is to say, it is not preferable that the viscosity is out of the range because it may be difficult to make the viscosity at 25°C of the finally obtained emulsion type adhesive composition according to the present invention low, as low as 1000 mPa·s or lower, more preferably 500 mPa·s or lower.

Moreover, it is preferable that the acrylic adhesive emulsion (A) that constitutes the present invention has an average particle diameter of about 70 to about 500 nm. When the particle diameter is out of the range, the stability of particles may be poor, or separation and sedimentation of the emulsion may occur.

Furthermore, it is preferable that the acrylic adhesive emulsion (A) that constitutes the present invention has a gel fraction of about 40 to about 80%. When the gel fraction is out of the range, an insufficient cohesive force or low tackiness may occur.

[Copolymerization Emulsion (B)]

Next, description will be made on the high-Tg copolymer emulsion (B): that is used mixing with the low-Tg acrylic adhesive emulsion (A) being the main component; that has a higher Tg than (A) ; and that is an accessory component. The copolymer emulsion (B) that constitutes the emulsion type adhesive composition according to the present invention is an emulsion of a copolymer obtained by subjecting at least an alkyl (meth)acrylate-based monomer to emulsion polymerization in the presence of a tackifying resin. Moreover, the copolymer emulsion (B) is an emulsion of a copolymer obtained by subjecting a monomer mixture containing an alkyl (meth)acrylate-based monomer to emulsion polymerization in the presence of 20 to 200 parts by mass of a tackifying resin relative to 100 parts by mass of the monomer mixture, and the copolymer has a Tg of -30°C to 30°C, a molecular weight of 5000 to 70000, and further an average particle diameter of 200 to 2000 nm. By constituting the copolymer emulsion as such, the gel fraction of the copolymer became small, as small as 20% or less, however the gel fraction may be 0. The content of the copolymer emulsion (B) that is an accessory component of the emulsion type adhesive composition according to the present invention is within a range from 10 to 49% by mass, however it is more preferable to be mixed within a range from 20 to 40% by mass.

(Monomer Component)

Any of the alkyl (meth)acrylate-based monomers that are the same as those shown previously in the description of the acrylic adhesive emulsion (A) can be used as the alkyl (meth)acrylate-based monomer for use in obtaining the copolymer emulsion (B) that constitutes the present invention. That is to say, when the emulsion (B) is produced, a monomer mixture of the alkyl (meth)acrylates listed in the description of the emulsion (A) or a monomer mixture containing the previously-described other acrylic monomer and the copolymerizable monomer other than the acrylic monomers, and the previously-described unsaturated monomer having one of various kinds of functional groups (hereinafter, referred to as "other copolymerizable monomer") together with the alkyl (meth) acrylate-based monomer can be used. Thus, the description on the usable monomers is omitted. Moreover, the emulsion (B) is obtained by copolymerizing a monomer mixture that contains at least an alkyl (meth)acrylate-based monomer and that uses a monomer or monomers among one or more of the above-described monomers together with the alkyl (meth)acrylate-based monomer, and the production methods that are the same as those in producing the emulsion (A) can be utilized as the production method in producing the emulsion (B) . Accordingly, the description on the production method of the emulsion (B) is omitted. However, when the monomer mixture for obtaining the copolymer emulsion (B) is designed, it is required that the copolymer to be obtained through emulsion polymerization have a Tg of -30°C to 30°C. This will be described later.

The kinds and amounts of the other copolymerizable monomers as listed previously, the copolymerizable monomers being used as necessary together with the alkyl (meth)acrylate-based monomer in producing the copolymer emulsion (B) that constitutes the present invention, are not particularly limited. According to studies conducted by the present inventors, with respect to the amount used, it is preferable to use the other copolymerizable monomers in a ratio of, for example, 0.1 to 70% by mass, and more preferably within a range from about 0.1 to about 50% by mass in 100% by mass of the total components of the monomers for forming the copolymer emulsion (B).

(Tackifying Resin)

The high-Tg copolymer emulsion (B) that constitutes the present invention is obtained by subjecting a monomer containing at least an alkyl (meth) acrylate-based monomer in the presence of a tackifying resin when the high-Tg copolymer emulsion (B) is obtained by subjecting the monomer mixture as described-above to emulsion polymerization. That is to say, in the present invention, the tackifying resin is not allowed to exist when the low-Tg acrylic adhesive emulsion (A) being the main component is produced, but the tackifying resin is allowed to exist when the high-Tg copolymer emulsion (B) to be an accessory component is obtained and prepared through emulsion polymerization. By constituting the high-Tg copolymer emulsion (B) as such, the tackiness of the high-Tg copolymer emulsion (B) that has normally a high holding force and a low tackiness can be enhanced, further, the tackifying resin can be contained in a large amount, and therefore a sufficiently high holding force and a sufficiently high tackiness can be realized in the adhesive according to the present invention. Furthermore, by preparing the copolymer that constitutes the emulsion (B) so as to have particular characteristics, the remarkable effects of the present invention are achieved. That is to say, according to studies conducted by the present inventors, by constituting the copolymer emulsion (B) as such, the copolymer emulsion (B) becomes a copolymer emulsion in which the emulsion and the tackifying resin are in a favorable composite state, and further, favorable dissolution or dispersed state of the tackifying resin is maintained even in the case where the emulsion (B) is mixed with the previously described low-Tg acrylic adhesive emulsion (A) being the main component to prepare the emulsion type adhesive composition according to the present invention.

That is to say, according to studies conducted by the present inventors, when a tackifying resin is allowed to exist in subjecting a monomer mixture containing at least an alkyl (meth)acrylate-based monomer to emulsion polymerization to prepare the copolymer emulsion (B), the tackifying resin is in a state where the tackifying resin is dissolved or dispersed in the monomer mixture, and when the monomer mixture is subjected to emulsion polymerization while maintaining the state, the tackifying resin can be uniformly dissolved or dispersed in the copolymer emulsion (B) obtained. In the emulsion type adhesive composition according to the present invention, when the high-Tg copolymer emulsion (B) which is thus prepared and in which the tackifying resin is uniformly dissolved or dispersed is mixed in the low-Tg acrylic adhesive emulsion (A) being the main component, the emulsions (A) and (B) both of which are acrylic are immediately mixed in a favorable state with favorable compatibility. It is considered that, as a result, the obtained adhesive can be made to have excellent properties without separation and sedimentation of the tackifying resin that is contained in the composition even when the composition has a low viscosity.

According to studies conducted by the present inventors, in the case where an emulsion type adhesive composition having the constitution containing a mixture of two kinds of emulsions of a low-Tg acrylic adhesive emulsion (A) and a high-Tg copolymer emulsion (B), the constitution being similar to that of the present invention, is prepared, even though emulsion polymerization is conducted without allowing a tackifying resin to exist and then a tackifying resin that is the same one as used in the adhesive according to the present invention is added later in a form of emulsion when the high-Tg copolymer emulsion (B) is prepared, the remarkable effects of the present invention as described above cannot be obtained. That is to say, particularly in the case where the viscosity of the adhesive composition at 25°C is set to a low viscosity, as low as 1000 mPa·s or lower, an excellent emulsion type adhesive composition such as the one that is achieved in the present invention cannot be obtained because the separation of the tackifying resin added later occurs or the sedimentation of the tackifying resin occurs with time. Moreover, according to studies conducted by the present inventors, it has been found that in the case where emulsion polymerization is conducted allowing a single monomer or a monomer mixture obtained by mixing two or more monomers to coexist with a tackifying resin when the low-Tg acrylic emulsion (A) that is to be the main component, polymerization is inhibited by the added tackifying resin and therefore it becomes difficult to improve the cohesive force of the adhesive to be obtained and favorable adhesiveness is not obtained. To the contrary, the problems of the conventional techniques can be solved all at once by only adopting the simple constitution such that emulsion polymerization is conducted allowing the adhesive composition to exist in a range of particular amounts to prepare an emulsion having particular characteristics and the emulsion is mixed with the low-Tg acrylic adhesive emulsion (A) being the main component when the high-Tg copolymer emulsion (B) that is specified in the present invention and that is to be an accessory component. Particularly in the field of low-viscosity adhesives that have been desired in recent years from the reason that such low-viscosity adhesives can reduce the application quantity and can realize high-speed coating, an emulsion type adhesive composition of excellent performance that is capable of forming an adhesive layer having a high adhesive force and a high tackiness can be provided.

The tackifying resin is not particularly limited as long as the tackifying resin is dissolved or dispersed in the monomer mixture, and any of conventionally known tackifying resins can be used. Examples of the tackifying resin include rosin-based resins, polyterpene-based resins, coumarone-indene resins, phenol resins, xylene resins, aliphatic-based petroleum resins, and aromatic-based petroleum resins, and one or more of these can be used. Examples of the rosin-based resin include natural rosins, rosin esters, hydrogenated rosins, hydrogenated rosin esters, polymerized rosins, polymerized rosin esters, disproportionated rosins, and disproportionated rosin esters. Examples of the polyter-pene-based resin include $\alpha$-pinene resins, $\beta$-pinene resins, and terpene phenolic resins. Moreover, hydrogenated petroleum resins derived from aliphatic-based petroleum resins or aromatic-based petroleum resins are also included in aliphatic-based petroleum resins or aromatic-based petroleum resins.

Among the tackifying resins, it is preferable to use a tackifying resin having a softening point of 70°C to 170°C as the tackifying resin for use in the present invention. Specific examples of the tackifying resin having a softening point within the above-described range include PENSEL D-125 (trade name, manufactured by Arakawa Chemical Industries, Ltd.) which is a polymerized rosin ester having a softening point of 125°C, PENSEL D-160 (trade name, manufactured by Arakawa Chemical Industries, Ltd.) which is a polymerized rosin ester having a softening point of 150°C, PINEREZ 2410 (trade name, manufactured by LAWTER) which is a rosin ester having a softening point of 100°C, YS Resin PX1150 (trade name, manufactured by Yasuhara Chemical Co., Ltd.) which is a terpene resin having a softening point of 115°C, and YS POLYSTER T160 (trade name, manufactured by Yasuhara Chemical Co., Ltd.) which is a terpene phenolic resin having a softening point of 160°C.

It is preferable that the amount of the tackifying resin used is 20 to 200 parts by mass, further 40 to 120 parts by mass relative to 100 parts by mass of the monomer mixture for use in emulsion polymerization to obtain the copolymer emulsion (B). In the case where the amount used is less than 20 parts by mass, when the high-Tg copolymer emulsion (B) is mixed with the low-Tg acrylic adhesive emulsion (A) to be the main component to prepare the emulsion type adhesive composition according to the present invention, the amount of the tackifying resin is too small, and an effect given by the addition of the tackifying resin cannot be exhibited sufficiently. Therefore, in the case where an adhesive layer is formed, it becomes difficult to realize a high adhesive force and a high tackiness. On the other hand, when the amount used is more than 200 parts by mass, emulsion polymerization is excessively inhibited in preparing the copolymer emulsion (B), and when the copolymer emulsion (B) is mixed with the low-Tg acrylic adhesive emulsion (A) to prepare the emulsion type adhesive composition according to the present invention, a satisfactory cohesive force of the adhesive may not be obtained.

(Production Method)

The copolymer emulsion (B) as well as the acrylic adhesive emulsion (A) can appropriately be produced through a conventionally known emulsion polymerization method. Examples of the emulsion polymerization method include a one-step polymerization method, a multi-step polymerization method, and a method in combination thereof, and any of these can be used. The polymerization initiators and surface active agents that can be used in the above-described polymerization are the same as those that can be used in the production of the acrylic adhesive emulsion (A), and therefore the description is omitted.

(Physical Properties)

It is required that the copolymer emulsion (B) that is obtained in the manner as described above and that constitutes the present invention have a glass transition temperature (Tg) of -30°C to 30°C, which is higher than that of the emulsion (A) used together with the copolymer emulsion (B). Further, the copolymer emulsion (B) having a Tg of about -20°C to about 20°C is more preferable. When the Tg is lower than -30°C or higher than 30°C, a high adhesive force and a high tackiness cannot be realized in the previously described adhesive layer that is formed using the adhesive composition obtained by mixing the copolymer emulsion (B) with the low-Tg acrylic adhesive emulsion (A). In addition, the Tg of the copolymer emulsion (B) can be measured by the same method as in the previously described case where the acrylic adhesive emulsion (A) is prepared as a copolymer.

Moreover, it is required that the copolymer emulsion (B) that constitutes the present invention have a molecular weight of 5000 to 70000. As described previously, when the monomer mixture containing an alkyl (meth)acrylate-based monomer is subjected to emulsion polymerization in the presence of a tackifying resin, the molecular weight of the copolymer to be obtained becomes low. As a result, by using, as an accessory component, the high-Tg copolymer emulsion (B) that is specified in the present invention, the adhesive composition has characteristics capable of realizing a sufficiently high adhesive force and a sufficiently high tackiness. In addition, in the case where emulsion polymerization is conducted in a state where the tackifying resin does not exist or in a state where the amount of the tackifying resin is small, the copolymer emulsion (B) has a molecular weight of 100000 or higher and cannot realize the remarkable effects of the present invention.

Further, the copolymer emulsion (B) that is constituted as described above has a gel fraction of 20% or less. According to studies conducted by the present inventors, when the gel fraction exceeds 20%, a sufficiently high adhesive force and a sufficiently high tackiness cannot be realized in the adhesive layer that is formed using the adhesive composition obtained by mixing the copolymer emulsion (B). Although it is possible to specify the characteristics of the copolymer emulsion (B) that characterizes the present invention by the gel fraction, the characteristics are specified by the molecular weight in the present invention because the differences among copolymers emulsions can be more clearly specified.

Furthermore, it is required that the copolymer emulsion (B) that constitutes the present invention have an average particle diameter of 200 to 2000 nm, and more preferably 200 to 1000 nm. In the case where the average particle diameter is less than 200 nm, when the copolymer emulsion (B) is mixed with the acrylic adhesive emulsion (A) to prepare the emulsion type adhesive composition, aggregation occurs. On the other hand, in the case where the average particle diameter is larger than 2000 nm, when the emulsion type adhesive emulsion is left to stand, separation occurs.

Furthermore, it is preferable that the copolymer emulsion (B) has a viscosity of about 50 to about 1000 mPa·s at 25°C, and more preferably 50 to 500 mPa·s. It is not preferable that the viscosity is out of the above-described range because it may be difficult to make the finally obtained emulsion type adhesive composition according to the present invention 1000 mPa·s or lower.

[Emulsion Type Adhesive Composition]

The emulsion type adhesive composition according to the present invention is constituted such that the emulsion type adhesive composition contains: the low-Tg acrylic adhesive emulsion (A) as the main component the content of which is 51 to 90% by mass, and preferably 60 to 80% by mass; and, as an accessory component, the high-Tg copolymer emulsion (B) which has particular characteristics described above and the content of which is 10 to 49% by mass, and preferably 20 to 40% by mass. The emulsion type adhesive composition according to the present invention is obtained by mixing the low-Tg acrylic adhesive emulsion (A) being the main component and the high-Tg copolymer emulsion (B) being the accessory component in the above-described ratio, and thereby is excellent in liquid stability and achieves well-balanced adhesive performance (high adhesive force and high tackiness) of the adhesive layer formed using the emulsion type adhesive composition.

It is required that the emulsion type adhesive composition according to the present invention have a low viscosity, as low as a viscosity of 1000 mPa·s or lower at 25°C measured with a B-type viscometer, however in order to reduce of the application quantity and improve coating performance at a high speed, it is preferable that the viscosity at 25°C is 50 to 700 mPa·s, and preferably about 500 mPa·s. Moreover, it is more preferable that the emulsion type adhesive composition according to the present invention has a viscosity of 200 mPa·s or lower, and further 100 mPa·s or lower at a shear rate of $10^4$ $s^{-1}$ at 25°C measured with a rheometer. In addition, the method for measuring the viscosity will be described later. The emulsion type adhesive composition according to the present invention has a low viscosity as described above, and therefore is economical because it can reduce the application quantity of the adhesive composition when used. Moreover, coating at a high speed can be realized when an adhesive layer is formed, and therefore a remarkable effect of improving operational efficiency is also obtained. Furthermore, in spite of being an adhesive having a low viscosity as described above, the emulsion type adhesive composition according to the present invention has such an excellent performance that is capable of forming an adhesive layer having a high adhesive force and a high tackiness. In addition, when the viscosity of the emulsion type adhesive composition according to the present invention is adjusted to a desired range of 1000 mPa·s or lower as specified in the present invention, adjusting the viscosity using a conventionally known thickening agent is also a preferred embodiment.

**Examples**

Hereinafter, the present invention will be described more specifically giving Synthesis Examples, Examples, and Comparative Examples. In addition, the "part" or "parts" in the description is on a mass basis.

The glass transition temperature Tg (°C) was determined by the following formula for respective emulsions used in Examples and Comparative Examples and each made of a copolymer.

$$\text{Formula: } 1/(Tg + 273) = \Sigma[Wn/(Tg_n + 273)]$$

(in the formula, Tg (°C) represents glass transition temperature of a copolymer, Wn represents a weight fraction of each monomer, $Tg_n$ (°C) represents glass transition temperature of a homopolymer of each monomer, and n represents each monomer species.)

The following literature data were used for the glass transition temperature $Tg_n$ (°C) of a homopolymer of each monomer in determining the glass transition temperature Tg (°C) for respective emulsions.

2-Ethylhexyl acrylate (2EHA): -70°C
Butyl acrylate (BA): -55°C
Methyl methacrylate (MMA): 105°C

Isononyl acrylate (INA): -85°C
Styrene: 100°C
Acrylic acid: (AAC): 106°C

[Synthesis Example 1: Synthesis of Acrylic Adhesive Emulsion (A-1)]

In a reaction apparatus equipped with a thermometer, a stirrer, a dropping apparatus, a reflux condenser, and a nitrogen-introducing pipe, 28 parts of ion exchanged water were weighed and placed, the apparatus was then filled with nitrogen and sealed, and the internal temperature was raised to 80°C. Into the reaction apparatus, 2 parts of a 10% aqueous ammonium persulfate solution were added while holding the temperature as it was, and immediately after the addition, a monomer-emulsified product which was separately prepared in the manner as described below was continuously dropped for 4 hours to conduct emulsion copolymerization. The monomer-emulsified product used above was prepared in such a way that 4 parts of a sodium polyoxyethylene alkyl ether sulfate (trade name: LATEMUL E-118B manufactured by Kao Corporation) and 30 parts of ion exchanged water were mixed with a monomer mixture containing 69 parts of 2-ethylhexyl acrylate (abbreviated as 2-EHA), 30 parts of butyl acrylate (abbreviated as BA), and 1 part of acrylic acid (abbreviated as AAC), and the resultant mixture was emulsified. Moreover, 4 parts of a 5% aqueous ammonium persulfate solution were dropped in parallel with the dropping of the monomer-emulsified product. After completion of dropping, the resultant mixture was left to stand at 80°C for 4 hours, and then cooled to room temperature. Finally, the resultant mixture was neutralized with ammonia water, and the solid content was adjusted with water to obtain acrylic adhesive emulsion A-1 being an aqueous resin dispersion liquid having a sold content of 60%, a viscosity of 70 mPa·s at 25°C, a pH of 8.0, and a specific gravity of 1.03 measured with a specific gravity cup. The physical properties were measured for the obtained emulsion A-1 by the methods described below, and the results are described together with the blending composition in Table 1.

[Method of Measuring Physical Properties of Emulsion] <Viscosity>

The viscosity was measured using a single cylinder rotational viscometer, a so-called B-type viscometer, at a number of revolution of 60 rpm at 25°C.

<Gel Fraction>

In the present invention, the gel fraction of an emulsion was measured in the manner as described below. The emulsion was applied on a polymer-laminated silicon separator so as to be 20 g/m$^2$/dry, and then dried in a drying machine at 120°C for 60 seconds. In 500 g of toluene, 1 g of the obtained film sample was immersed for 24 hours. After the immersion for 24 hours, filtration was conducted with a 300-mesh stainless steel wire, the residue after the filtration was then dried with a hot air drier at 90° for 3 hours and left to stand in a desiccator, and thereafter the weight of the residual film was measured to calculate the gel fraction from the change in weight before and after immersion.

<Measurement of Average Particle Diameter>

In the present invention, the average particle diameter of an emulsion was measured with a laser diffraction particle diameter distribution measurement apparatus SALD-7100 (manufactured by Shimadzu Corporation).

<Measurement of Weight Average Molecular Weight>

In the present invention, the weight average molecular weight of a tetrahydrofuran-solubilized product of a dried film was measured by GPC (Gel Permeation Chromatography) using polystyrene as a standard substance.

[Comparative Synthesis Examples 1 and 2: Synthesis of Acrylic Adhesive Emulsions (A-2) and (A-3)]

Acrylic adhesive emulsions (A-2) and (A-3) having a Tg of -45°C and -75°C respectively were prepared by the same method as in Synthesis Example 1 changing the constituents and amounts of blending of the monomer mixture in Synthesis Example 1 as described in Table 1. These emulsions are denoted as acrylic adhesive emulsions A-2 and A-3 of Comparative Synthesis Examples. The respective physical properties were also measured for the obtained emulsions A-2 and A-3 in the same manner as in the case of Emulsion A-1, and the results are described in Table 1. As shown in Table 1, the Tg of A-2 was -45°C, the Tg of A-3 was -75°C, and therefore any of them was not within the range of low Tg specified in the present invention.

Table 1: Compositions and physical properties of acrylic adhesive emulsions (A)

| | Synthesis Example 1 | Comparative Synthesis Example 1 | Comparative Synthesis Example 2 |
|---|---|---|---|
| Acrylic adhesive emulsion | A-1 | A-2 | A-3 |
| 2EHA | 69 | 34 | 60 |
| BA | 30 | 50 | - |
| INA | - | - | 39 |
| MMA | - | 15 | - |
| AAC | 1 | 1 | 1 |
| Tg (°C) | -65 | -45 | -75 |
| Viscosity (mPa·s) | 70 | 80 | 50 |
| pH | 8.0 | 8.0 | 8.0 |
| Gel fraction (%) | 45 | 55 | 40 |
| Average particle diameter (nm) | 400 | 350 | 500 |

[Synthesis Example 2: Synthesis of Copolymer Emulsion (B-1)]

In a reaction apparatus equipped with a thermometer, a stirrer, a dropping apparatus, a reflux condenser, and a nitrogen-introducing pipe, 28 parts of ion exchanged water were weighed and placed, the apparatus was then filled with nitrogen and sealed, and the internal temperature was raised to 80°C. Into the reaction apparatus, 2 parts of a 10% aqueous ammonium persulfate solution were added while holding the temperature as it was, and immediately after the addition, a monomer-emulsified product which was separately prepared in the manner as described below was continuously dropped for 4 hours to conduct emulsion copolymerization. The monomer-emulsified product used above was prepared in such a way that 4 parts of a sodium polyoxyethylene alkyl ether sulfate (trade name: LATEMUL E-118B manufactured by Kao Corporation) and 63 parts of ion exchanged water were mixed with a monomer mixture containing 49 parts of 2-ethylhexyl acrylate, 10 parts of methyl methacrylate (abbreviated as MMA), 40 parts of styrene (abbreviated as ST), 1 part of acrylic acid, and, as a tackifier (tackifying resin), 50 parts of a rosin-based resin (trade name: PENSEL D-125 manufactured by Arakawa Chemical Industries, Ltd.), and the resultant mixture was emulsified. Moreover, 4 parts of a 5% aqueous ammonium persulfate solution were dropped in parallel with the dropping of the monomer-emulsified product. After completion of dropping, the resultant mixture was left to stand at 80°C for 4 hours, and then cooled to room temperature. Finally, the resultant mixture was neutralized with ammonia water, and the solid content was adjusted with water to obtain copolymer emulsion B-1 being an aqueous resin dispersion liquid having a sold content of 60%, a viscosity of 100 mPa·s at 25°C, a pH of 8.0, an average particle diameter of 290 nm, and a specific gravity of 1.05 measured with a specific gravity cup. Moreover, the Tg value of B-1 determined from the monomer composition was -8°C. The physical properties were also measured for the obtained emulsion B-1 by the same methods as in the case of emulsion A-1. The results are described together with the blending composition in Table 2. Moreover, the particle size distribution obtained when the average particle diameter of B-1 was measured is shown in Figure 1.

[Synthesis Examples 3 to 7: Synthesis of Copolymer Emulsions (B-2) to (B-6)]

Copolymer emulsions (B-2) to (B-6) were prepared by the same method as in Synthesis Example 2 except that the monomer constituents and the amounts of blending in Synthesis Example 2 were changed as described in Table 2. The physical properties were also measured for the obtained emulsions (B-2) to (B-6) in the same manner, and the results are described together with the blending compositions in Table 2.

[Comparative Synthesis Examples 3 and 4: Synthesis of Copolymer Emulsions (B-7) and (B-8)]

Copolymer emulsions B-7 and B-8 were prepared by the same method as in Synthesis Example 2 except that the monomer constituents and amounts of blending were changed as described in Table 2. The measurement was also conducted for the obtained emulsions B-7 and B-8 in the same manner, and the results are described together with the

13

blending compositions in Table 2. As shown in Table 2, the Tg of B-7 was -42°C, the Tg of B-8 was 40°C, and therefore any of them was not within the range of high Tg specified in the present invention.

Table 2: Compositions and physical properties of copolymer emulsions (B)

| | Synthesis Example 2 | Synthesis Example 3 | Synthesis Example 4 | Synthesis Example 5 | Synthesis Example 6 | Synthesis Example 7 | Comparative Synthesis Example 3 | Comparative Synthesis Example 4 |
|---|---|---|---|---|---|---|---|---|
| Emulsion | B-1 | B-2 | B-3 | B-4 | B-5 | B-6 | B-7 | B-8 |
| 2EHA | 49 | 24 | 24 | 24 | 24 | 24 | 74 | 24 |
| BA | - | 25 | 25 | 25 | 25 | 25 | - | - |
| MMA | 10 | 50 | 50 | 50 | 50 | 50 | 25 | 75 |
| ST | 40 | - | - | - | - | - | - | - |
| AAC | 1 | 1 | 1 | 1 | 1 | 1 | 1 | 1 |
| LATEMUL E-118B | 4 | 4 | 4 | 4 | 4 | 4 | 4 | 4 |
| Tackifying resin | 50 | 20 | 40 | 50 | 100 | 200 | 50 | 50 |
| Tg (°C) | -8 | -1 | -1 | -1 | -1 | -1 | -42 | 40 |
| Viscosity (mPa·s) | 100 | 70 | 70 | 70 | 100 | 120 | 70 | 250 |
| pH | 8.0 | 8.0 | 8.0 | 8.0 | 8.0 | 8.0 | 8.0 | 8.0 |
| Molecular weight | 6000 | 60000 | 45000 | 40000 | 10000 | 5000 | 10000 | 70000 |
| Gel fraction (%) | 0 | 10 | 0 | 0 | 0 | 0 | 0 | 0 |
| Average particle diameter (nm) | 290 | 250 | 300 | 310 | 750 | 1200 | 500 | 350 |

[Comparative Synthesis Example 5: Synthesis of Copolymer Emulsion (B-9)]

Copolymer emulsion B-9 was prepared by the same method as in Synthesis Example 2 further blending 5 parts of trimethylolpropane trimethacrylate (trade name: LIGHT ESTER TMP manufactured by Kyoeisya Chemical Co., Ltd.) as a crosslinking agent in addition to the blending of Synthesis Example 5. Physical properties of the obtained emulsion B-9 are shown together with the blending composition in Table 3. As shown in Table 3, the weight average molecular weight of B-9 was 110000 and was not within the range as specified in the present invention.

[Comparative Synthesis Example 6: Synthesis of Copolymer Emulsion (B-10)]

Copolymer emulsion B-10 was prepared by the same method as in Synthesis Example 2 using LATEMUL E-118B in an amount (12 parts) 3 times the amount in the blending of Synthesis Example 5. Physical properties of the obtained emulsion B-10 are shown together with the blending composition in Table 3. As shown in Table 3, the average particle diameter of B-10 was 100 nm and was not within the range as specified in the present invention.

[Comparative Synthesis Example 7: Synthesis of Copolymer Emulsion (B-11)]

Copolymer emulsion B-11 was prepared by the same method as in Synthesis Example 2 using LATEMUL E-118B in an amount (2 parts) 0.5 times the amount in the blending of Synthesis Example 5. Physical properties of the obtained emulsion B-11 are shown together with the blending composition in Table 3. As shown in Table 3, the average particle diameter of B-11 was 2500 nm and was not within the range as specified in the present invention.

[Comparative Synthesis Example 8: Synthesis of Copolymer Emulsion (B-12)]

Copolymer emulsion B-12 was prepared by the same method as in Synthesis Example 2 without using PENSEL D-125 being a tackifier (tackifying resin) in the blending of Synthesis Example 5. Physical properties of the obtained emulsion B-12 are shown together with the blending composition in Table 3. As shown in Table 3, the weight average molecular weight of B-12 was 360000 and was not within the range as specified in the present invention.

[Comparative Synthesis Example 9: Synthesis of Copolymer Emulsion (AB-1)]

In a reaction apparatus equipped with a thermometer, a stirrer, a dropping apparatus, a reflux condenser, and a nitrogen-introducing pipe, 28 parts of ion exchanged water were weighed and placed, the apparatus was then filled with nitrogen and sealed, the internal temperature was raised to 80°C, 2 parts of a 10% aqueous ammonium persulfate solution were added thereto while holding the temperature as it was. Immediately after the addition, a monomer-emulsified product was dropped continuously for 4 hours to conduct emulsion polymerization, the monomer emulsified separately prepared in such a way that 15 parts of a rosin-based resin (trade name: PENSEL D-125 manufactured by Arakawa Chemical Industries, Ltd.) as a tackifier, 4 parts of a sodium polyoxyethylene alkyl ether sulfate (trade name: LATEMUL E-118B manufactured by Kao Corporation), and 40 parts of ion exchanged water were mixed with a monomer mixture containing 55.5 parts of 2-ethylhexyl acrylate, 28.5 parts of butyl acrylate, 15 parts of methyl methacrylate, and 1 part of acrylic acid, and the resultant mixture was emulsified. In parallel with the dropping, 4 parts of a 5% aqueous ammonium persulfate solution were dropped. After completion of dropping, the resultant mixture was left to stand at 80°C for 4 hours, and then cooled to room temperature. The resultant mixture was neutralized with ammonia water, and the solid content was adjusted with water to obtain an aqueous dispersion liquid having a sold content of 60%, a viscosity of 500 mPa·s at 25°C, a pH of 8.0. The aqueous dispersion liquid is denoted as copolymer emulsion AB-1. The physical properties thereof are shown together with the blending composition in Table 3. AB-1 is obtained through emulsion polymerization conducted adding a tackifier to a low-Tg monomer and a high-Tg monomer, and the constitution is totally different from the constitution specified in the present invention.

Table 3: Compositions and physical properties of copolymer emulsions (B)

|  | Comparative Synthesis Example 5 | Comparative Synthesis Example 6 | Comparative Synthesis Example 7 | Comparative Synthesis Example 8 | Comparative Synthesis Example 9 |
|---|---|---|---|---|---|
| Copolymer emulsion | B-9 | B-10 | B-11 | B-12 | AB-1 |
| 2EHA | 24 | 24 | 24 | 24 | 55.5 |

(continued)

| | Comparative Synthesis Example 5 | Comparative Synthesis Example 6 | Comparative Synthesis Example 7 | Comparative Synthesis Example 8 | Comparative Synthesis Example 9 |
|---|---|---|---|---|---|
| BA | 25 | 25 | 25 | 25 | 28.5 |
| MMA | 50 | 50 | 50 | 50 | 15 |
| ST | - | - | - | - | - |
| AAC | 1 | 1 | 1 | 1 | 1 |
| LIGHT ESTER TMP | 5 | - | - | - | - |
| LATEMUL E-118B | 4 | 12 | 2 | 4 | 4 |
| Tackifying resin | 50 | 50 | 50 | - | 15 |
| Tg (°C) | -2 | -2 | -2 | -2 | -49 |
| Viscosity (mPa·s) | 100 | 1800 | 50 | 200 | 500 |
| pH | 8.0 | 8.0 | 8.0 | 8.0 | 8.0 |
| Gel fraction (%) | 30 | 0 | 0 | 0 | 20 |
| Molecular weight | 110000 | 30000 | 50000 | 360000 | 200000 |
| Average particle diameter (nm) | 300 | 100 | 2500 | 400 | 450 |

[Examples 1 to 10 and Comparative Examples 1 to 11]

Emulsion type adhesive compositions of Examples according to the present invention and Comparative Examples were obtained: using acrylic adhesive emulsions (A-1) to (A-3) obtained in Synthesis Example 1 and Comparative Synthesis Examples 1 and 2, and polymer emulsions (B-1) to (B-12) obtained in Synthesis Examples 2 to 7 and Comparative Synthesis Examples 3 to 8; blending the emulsions according to the combinations and ratios described in Table 4-1 and Table 4-2; and adjusting the viscosities to about 500 mPa·s with a thickening agent. Moreover, an emulsion type adhesive composition prepared using copolymer emulsion (AB-1) obtained in Comparative Synthesis Example 9 was used as the emulsion type adhesive composition of Comparative Example 7. In addition, SUPER ESTER E-730-55 (trade name, viscosity of 40 mPa·s, average particle diameter of 500 nm, specific gravity of 1.05) manufactured by Arakawa Chemical Industries, Ltd. was used as a tackifier emulsion in Table 4-2. The viscosity for the acrylic adhesive emulsion of Example 1 prepared in the manner as described above was 100 mPa·s at a shear rate of $10^4$ s$^{-1}$ measured with a rheometer by the method described below.

<Measurement of Viscosity with Rheometer>

The measurement of viscosity with a rheometer was conducted in the manner as described below. The viscosity to a shear rate of $10^4$ s$^{-1}$ was measured using a cone plate with a viscoelasticity measuring apparatus Physica MCR301 (manufactured by Anton Paar GmbH) under a condition of 25°C.

[Comparative Examples 8 and 9]

Adhesive compositions of Comparative Examples 8 and 9 were prepared in the same manner as in Example 4 using: acrylic adhesive emulsions A-2 and A-3 prepared in Comparative Synthesis Examples 1 and 2 respectively; and copolymer emulsion (B-4) prepared in Synthesis Example 5 and specified in the present invention as a copolymer emulsion (B) used together with acrylic adhesive emulsion A-2 or A-3.

[Comparative Examples 10 and 11]

In the adhesive compositions of Comparative Examples 10 and 11, acrylic adhesive emulsion (A-1) obtained in Synthesis Example 1 and specified in the present invention and copolymer emulsion (B-4) prepared in Synthesis Example 5 and specified in the present invention were used and the ratio between both emulsions used was set so as to be out of the range as specified in the present invention.

Table 4-1: Blending in compositions of Examples

| Example | 1 | 2 | 3 | 4 | 5 | 6 | 7 | 8 | 9 | 10 |
|---|---|---|---|---|---|---|---|---|---|---|
| A-1 | 70 | 70 | 70 | 70 | 70 | 70 | 85 | 75 | 65 | 55 |
| B-1 | 30 | | | | | | | | | |
| B-2 | | 30 | | | | | | | | |
| B-3 | | | 30 | | | | | | | |
| B-4 | | | | 30 | | | 15 | 25 | 35 | 45 |
| B-5 | | | | | 30 | | | | | |
| B-6 | | | | | | 30 | | | | |

Table 4-2: Blending in compositions of Comparative Examples

| Comparative Example | 1 | 2 | 3 | 4 | 5 | 6 | 7 | 8 | 9 | 10 | 11 |
|---|---|---|---|---|---|---|---|---|---|---|---|
| A-1 (specified in the present invention) | 70 | 70 | 70 | 70 | 70 | 70 | | | | 95 | 50 |
| A-2 (Tg = -45°C) | | | | | | | | 70 | | | |
| A-3 (Tg = -75°C) | | | | | | | | | 70 | | |
| B-4 (specified in the present invention) | | | | | | | | 30 | 30 | 5 | 50 |
| B-7 (low Tg) | 30 | | | | | | | | | | |
| B-8 (high Tg) | | 30 | | | | | | | | | |
| B-9 (high molecular weight) | | | 30 | | | | | | | | |
| B-10 (small particle diameter) | | | | 30 | | | | | | | |
| B-11 (large particle diameter) | | | | | 30 | | | | | | |
| B-12 (without using tackifier) | | | | | | 20 | | | | | |
| AB-1 (Polymerized A and B altogether) | | | | | | | 90 | | | | |
| Tackifier emulsion | | | | | | 10 | 10 | | | | |

[Evaluation of Emulsion Type Adhesive Composition]

Performance was evaluated for respective emulsion type adhesive compositions of Examples each having a composition shown in Table 4-1 and respective emulsion type adhesive compositions of Comparative Examples each having a composition shown in Table 4-2 by the method and criteria described below. Specifically, adhesive force and loop tack were measured to evaluate the performance, and the liquid stability was evaluated according to the criteria described below. The obtained results are shown together in Table 5. The viscosities measured by the method previously described are also shown together in Table 5.

<Performance Test>

(Preparation of Test Samples>

Each of the emulsion type adhesive compositions of Examples and Comparative Examples was applied on a polymer-laminated silicon separator so as to be 20 g/m$^2$/dry, and then dried in a drying machine at 120°C for 60 seconds. Thereafter, wood-free paper (64 g/m$^2$) was laminated on the adhesive layer and was left to stand in an atmosphere of 23°C/50% RH for 16 hours or longer to prepare an adhesive sheet, and the adhesive sheet was used as a test sample. Moreover, a plurality of the test samples were prepared under the same condition and were used for the tests described below.

(Adhesive Force)

The test sample obtained above was crimped to a stainless steel plate in an atmosphere of 23°C/50% RH, and the 180° peel strength of the test sample immediately after being crimped was measured with a Tensilon tester in accordance with JIS Z0237 Testing methods of pressure-sensitive adhesive tapes and sheets. With respect to adhesive force, a measured value of 15 N/25 mm or more was evaluated as a high adhesive force. The measured values obtained are shown in Table 5.

(Loop Tack)

The test sample obtained above was stuck in a loop shape to a stainless steel plate horizontally placed in an atmosphere of 23°C/50% RH, and the strength at the time when the test sample was peeled at a rate of 300 mm/min was measured with a Tensilon tester. With respect to tackiness, a measured value of 13 N/25 mm or more was evaluated as a high tackiness. The measured values obtained are shown in Table 5.

<Liquid Stability>

For each of the emulsion type adhesive compositions of Examples and Comparative Examples, whether aggregates were observed or not during production and the separation state of the liquid after the sample was left to stand (3 months) were visually checked and evaluated. The sign "A" in Table 5 means that no aggregates were observed during production and no liquid separation was observed after the sample was left to stand. On the other hand, the term "Aggregated" means that aggregates were observed during production, and the term "Separated" means that liquid separation was observed after the sample was left to stand. Evaluation results are shown in Table 5.

Table 5: Evaluation results of each of emulsion type adhesive compositions

|  | Viscosity (mPa·s) | Adhesive force (N/25 mm) | Loop tack (N/25 mm) | Liquid stability |
|---|---|---|---|---|
| Example 1 | 500 | 18 | 15 | A |
| Example 2 | 500 | 16 | 13 | A |
| Example 3 | 500 | 19 | 15 | A |
| Example 4 | 470 | 20 | 16 | A |
| Example 5 | 500 | 22 | 17 | A |
| Example 6 | 520 | 22 | 18 | A |
| Example 7 | 450 | 15 | 13 | A |
| Example 8 | 480 | 18 | 16 | A |
| Example 9 | 480 | 20 | 16 | A |
| Example 10 | 500 | 20 | 13 | A |
| Comparative Example 1 | 500 | 10 | 9 | A |
| Comparative Example 2 | 540 | 12 | 10 | A |
| Comparative Example 3 | 510 | 13 | 10 | A |
| Comparative Example 4 | - | - | - | Aggregated |

(continued)

|  | Viscosity (mPa·s) | Adhesive force (N/25 mm) | Loop tack (N/25 mm) | Liquid stability |
|---|---|---|---|---|
| Comparative Example 5 | 500 | 19 | 15 | Separated |
| Comparative Example 6 | 480 | 16 | 12 | Separated |
| Comparative Example 7 | 500 | 14 | 10 | Separated |
| Comparative Example 8 | 470 | 12 | 9 | A |
| Comparative Example 9 | 480 | 14 | 10 | A |
| Comparative Example 10 | 500 | 11 | 10 | A |
| Comparative Example 11 | 520 | 18 | 8 | A |

As clearly understood from Table 5, it was confirmed that any of the adhesive layers each formed using the adhesive composition of Examples had a high adhesive force of 15 N/25 mm or more, and moreover, any of them had a high tackiness as high as a loop tack of 13 N/25 mm or more and was excellent in liquid stability. On the other hand, with respect to adhesive layers formed using adhesive compositions of Comparative Examples, the adhesive force and tackiness were not sufficient for the adhesive compositions of Comparative Examples 1 to 3, and 7, and the adhesive force and tackiness were not able to be measured for the adhesive composition of Comparative Example 4 in which a copolymer emulsion (B) having an average particle diameter smaller than that specified in the present invention was used. Further, as shown in Table 5, the separation occurred and the liquid stability was poor in any of the adhesive composition of Comparative Example 5 in which a copolymer emulsion (B) having an average particle diameter larger than that specified in the present invention was used and the adhesive compositions of Comparative Example 6 and Comparative Example 7 each containing a copolymer emulsion (B) obtained not allowing a tackifying resin in emulsion polymerization for producing the copolymer emulsion (B) but adding a commercially available tackifier emulsion.

Adhesive compositions of Comparative Examples 8 and 9 were prepared in the same manner as in Example 2 using: acrylic adhesive emulsions A-2 and A-3 prepared in Comparative Synthesis Examples 1 and 2 respectively; and copolymer emulsion B-4 prepared in Synthesis Example 5 as a copolymer emulsion (B) used together with acrylic adhesive emulsion A-2 or A-3. However, as shown in Table 5, these adhesive compositions did not have excellent adhesive performance of a high adhesive force and a high tackiness, which was contrary to the adhesive composition of Example 4.

**Claims**

1. An emulsion type adhesive composition comprising a mixture of at least two kinds of emulsions, the emulsion type adhesive composition comprising:

    51 to 90% by mass of a low-Tg acrylic adhesive emulsion (A) as a main component; and
    10 to 49% by mass of a high-Tg copolymer emulsion (B) as an accessory component, and having:

        a solid content of 50% or more; and
        a viscosity of 1000 mPa·s or lower at 25°C, wherein:

            the low-Tg acrylic adhesive emulsion (A) has a glass transition temperature (Tg) of -70°C to -50°C;
            the high-Tg copolymer emulsion (B) is an emulsion of a copolymer obtained by subjecting a monomer mixture comprising at least an alkyl (meth)acrylate-based monomer to emulsion polymerization in the presence of 20 to 200 parts by mass of a tackifying resin relative to 100 parts by mass of the monomer mixture, the copolymer having a glass transition temperature (Tg) of -30°C to 30°C, a weight average molecular weight of 5000 to 70000 and an average particle diameter of 200 to 2000 nm.

    wherein the viscosity, the Tg, the weight average molecular weight and the average particle diameter are measured by the methods disclosed in the description.

2. The emulsion type adhesive composition according to claim 1, wherein an amount of the tackifying resin is within a range from 40 to 120 parts by mass relative to 100 parts by mass of the monomer mixture comprising an alkyl (meth)acrylate-based monomer, and the copolymer has a weight average molecular weight of 5000 to 60000.

3. The emulsion type adhesive composition according to claim 1 or 2, comprising:

the low-Tg acrylic adhesive emulsion (A) within a range from 60 to 80% by mass; and
the high-Tg copolymer emulsion (B) within a range from 20 to 40% by mass as the accessory component.

4. The emulsion type adhesive composition according to any one of claims 1 to 3, wherein the low-Tg acrylic adhesive emulsion (A) has a viscosity within a range from 50 to 700 mPa·s at 25°C, and the high-Tg copolymer emulsion (B) has a viscosity within a range from 50 to 1000 mPa·s at 25°C.

5. The emulsion type adhesive composition according to any one of claims 1 to 4, wherein the tackifying resin has a softening point (°C) of 70 to 170°C.

**Patentansprüche**

1. Eine Klebstoffzusammensetzung vom Emulsionstyp, umfassend eine Mischung von mindestens zwei Arten von Emulsionen, wobei die Klebstoffzusammensetzung vom Emulsionstyp umfasst:

51 bis 90 Massen-% einer Acrylklebstoffemulsion (A) mit niedriger Tg als Hauptkomponente;
und 10 bis 49 Massen-% einer Hoch-Tg-Copolymeremulsion (B) als Nebenkomponente und mit:

einem Feststoffgehalt von 50% oder mehr;
und einer Viskosität von 1000 mPa·s oder weniger bei 25 °C, wobei:

die Acrylklebstoffemulsion (A) mit niedriger Tg eine Glasübergangstemperatur (Tg) von -70 °C bis -50 °C aufweist;
die Hoch-Tg-Copolymeremulsion (B) ist eine Emulsion eines Copolymers, das erhalten wird, indem eine Monomermischung, die mindestens ein Alkyl(meth)acrylat basiertes Monomer enthält, einer Emulsionspolymerisation in Gegenwart von 20 bis 200 Massenteilen eines klebrigmachenden Harzes, bezogen auf 100 Massenteile der Monomermischung, unterzogen wird, und
das Copolymer eine Glasübergangstemperatur (Tg) von -30°C bis 30°C, ein Gewichtsmittel des Molekulargewichts von 5000 bis 70000 und einen mittleren Teilchendurchmesser von 200 bis 2000 nm hat;

wobei die Viskosität, die Tg, das Gewichtsmittel des Molekulargewichts und der mittlere Teilchendurchmesser mit den Methoden, die in der Beschreibung offenbart sind, gemessen werden.

2. Die Klebstoffzusammensetzung vom Emulsionstyp nach Anspruch 1, wobei die Menge des klebrigmachenden Harzes in einem Bereich von 40 bis 120 Massenteilen, bezogen auf 100 Massenteile der Monomermischung, die ein Alkyl(meth)acrylat basiertes Monomer umfasst, liegt, und das Copolymer ein Gewichtsmittel des Molekulargewichts von 5000 bis 60000 hat.

3. Die Klebstoffzusammensetzung vom Emulsionstyp nach Anspruch 1 oder 2, umfassend:

die Acrylklebstoffemulsion (A) mit niedriger Tg in einem Bereich von 60 bis 80 Massen-%;
und die Hoch-Tg-Copolymeremulsion (B) in einem Bereich von 20 bis 40 Massen-% als Nebenkomponente.

4. Die Klebstoffzusammensetzung vom Emulsionstyp nach einem der Ansprüche 1 bis 3, wobei die Acrylklebstoffemulsion (A) mit niedriger Tg eine Viskosität im Bereich von 50 bis 700 mPa·s bei 25 °C aufweist, und die Hoch-Tg-Copolymeremulsion (B) eine Viskosität im Bereich von 50 bis 1000 mPa·s bei 25 °C aufweist.

5. Die Klebstoffzusammensetzung vom Emulsionstyp nach einem der Ansprüche 1 bis 4, wobei das klebrigmachende Harz einen Erweichungspunkt (°C) von 70 bis 170 °C aufweist.

**Revendications**

1. Composition d'adhésif de type émulsion comprenant un mélange d'au moins deux types d'émulsions, la composition d'adhésif de type émulsion comprenant :

   51 à 90 % en masse d'une émulsion d'adhésif acrylique à Tg basse (A) en tant que composant principal ; et 10 à 49 % en masse d'une émulsion de copolymère à Tg élevée (B) en tant que composant accessoire, et présentant :

   une teneur en solides de 50 % ou plus ; et
   une viscosité de 1000 mPa.s ou moins à 25 °C, dans laquelle :

   l'émulsion d'adhésif acrylique à Tg basse (A) présente une température de transition vitreuse (Tg) de -70 °C à -50 °C ;
   l'émulsion de copolymère à Tg élevée (B) est une émulsion d'un copolymère obtenu par la soumission d'un mélange de monomères comprenant au moins un monomère à base de (méth)acrylate d'alkyle à une polymérisation en émulsion en présence de 20 à 200 parties en masse d'une résine collante par rapport à 100 parties en masse du mélange de monomères, le copolymère présentant une température de transition vitreuse (Tg) de -30 °C à 30 °C, un poids moléculaire moyen en poids de 5000 à 70 000, et un diamètre particulaire moyen de 200 à 2000 nm,
   dans laquelle la viscosité, la Tg, le poids moléculaire moyen en poids et le diamètre particulaire moyen sont mesurés par les procédés divulgués dans la description.

2. Composition d'adhésif de type émulsion selon la revendication 1, dans laquelle une quantité de la résine collante est dans une plage allant de 40 à 120 parties en masse par rapport à 100 parties en masse du mélange de monomères comprenant un monomère à base de (méth)acrylate d'alkyle, et le copolymère présente un poids moléculaire moyen en poids de 5000 à 60 000.

3. Composition d'adhésif de type émulsion selon la revendication 1 ou 2, comprenant :

   l'émulsion d'adhésif acrylique à Tg basse (A) dans une plage allant de 60 à 80 % en masse ; et
   l'émulsion de copolymère à Tg élevée (B) dans une plage allant de 20 à 40 % en masse en tant que composant accessoire.

4. Composition d'adhésif de type émulsion selon l'une quelconque des revendications 1 à 3, dans laquelle l'émulsion d'adhésif acrylique à Tg basse (A) présente une viscosité dans une plage allant de 50 à 700 mPa.s à 25 °C, et l'émulsion de copolymère à Tg élevée (B) présente une viscosité dans une plage allant de 50 à 1000 mPa.s à 25 °C.

5. Composition d'adhésif de type émulsion selon l'une quelconque des revendications 1 à 4, dans laquelle la résine collante présente un point de ramollissement (°C) de 70 à 170 °C.

[Figure 1]

RELATIVE PARTICLE AMOUNT (FREQUENCY)

PARTICLE DIAMETER (μm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11189610 A
- JP 2003096420 A
- JP 2003335805 A
- JP 2006124691 A

- JP 2010095609 A
- JP 2001207146 A
- JP S5958069 B

**Non-patent literature cited in the description**

- Method of representing hardness of film of synthetic resin emulsion (107-1996)'' (Nihon Emulsion Kogyokai Kikaku, ''Goseijushi emulsion no himaku no katasa hyojihouhou (107-1996). Japan Emulsion Industry Association Standard, 1996